# EUROPÄISCHE PATENTSCHRIFT

(11) **EP 1 930 151 B1**
(45) Veröffentlichungstag und Bekanntmachung des Hinweises auf die Patenterteilung: **30.03.2011**
(21) Anmeldenummer: 07450196.6
(22) Anmeldetag: 12.11.2007
(51) Int. Cl.: B32B 17/10, B08B 11/04, C03C 27/12, B08B 1/04

(54) **Verfahren zum Bearbeiten von Brandschutzglas**
Method for processing fire protection glass
Procédé destiné au traitement de verre ignifuge

(30) Priorität: 04.12.2006 AT 20052006
(43) Veröffentlichungstag der Anmeldung: 11.06.2008
(60) Teilanmeldung: 09168805.1
(73) Patentinhaber: Saint-Gobain Glass France S.A., 92400 Courbevoie (FR)
(72) Erfinder: Forstner, Helmut, 3363 Ulmerfeld (AT)
(74) Vertreter: Lendvai, Tomas

(56) Entgegenhaltungen:
- DE-B1- 2 816 437
- GB-A- 355 541
- GB-A- 371 795
- US-A- 1 829 647
- US-A- 4 558 480

## Beschreibung

Die Erfindung betrifft ein Verfahren und eine Vorrichtung zum Bearbeiten von Brandschutzglas.

Brandschutzglas besteht für gewöhnlich aus zwei zueinander parallel ausgerichteten Glasscheiben, zwischen denen wenigstens im Randbereich eine bei Wärmeeinwirkung expandierende und den Raum zwischen den Glasscheiben ausfüllende, gelartige Masse vorgesehen ist.

Beim Herstellen von Brandschutzglas ist es bei bestimmten Brandschutzglastypen vom Basismaterialproduzenten vorgeschrieben, dass die zwischen den beiden Glasscheiben des Brandschutzglases vorgesehene Masse im Randbereich entfernt und in die so gebildete Randfuge eine Dichtmasse eingebracht wird.

Diese Arbeit wurde bislang von Hand aus ausgeführt und ist daher entsprechend aufwändig und nur bei hoher Aufmerksamkeit und hoher Qualifikation zufriedenstellend auszuführen.

Die GB 371 795 A befasst sich mit dem Bearbeiten von Verbundglas (nicht Brandschutzglas), wobei im Randbereich das zwischen den beiden Glasscheiben des Verbundglases eingebrachte, die Scheiben miteinander verklebende Material entfernt und durch eine Versiegelungsmasse ersetzt werden soll. Hiezu wird vorgeschlagen, das die Scheiben miteinander verbindende Material durch ein erhitztes, sich drehendes nutbildendes Werkzeug zu entfernen und dann das abgelöste Material mit Hilfe von mit Wasser oder einem geeigneten Lösungsmittel beaufschlagten Bürsten zu entfernen.

Die aus der GB 371 795 A bekannte Arbeitstechnik mag für Verbundglas geeignet sein, ist aber wegen der Anwendung von Lösungsmitteln, Wasser und Wasserdampf für Brandschutzglas, wie es gemäß der vorliegenden Erfindung bearbeitet werden soll, nicht geeignet.

Die AT 406 699 B befasst sich nicht mit dem Bearbeiten von Brandschutzglas, sondern mit dem Versiegeln von Isolierglas, nämlich dem Einfüllen einer Versiegelungsmasse in die schon vorhandene und zu füllende Randfuge zwischen den Rändern der Glasscheibe und einem gegenüber den Rändern nach innen versetzten Abstandhalter zwischen den beiden Glasscheiben. Dabei ist eine Vorrichtung vorgesehen, welche mit einer oder zwei Düsen Versiegelungsmasse in die Randfuge einspritzt.

US 1,829,647 A offenbart ein Verfahren zur Versiegelung des Eckbereichs von Verbundglasscheiben.

US 4,558,480 A offenbart ein Verfahren und eine Vorrichtung zur Reinigung einer dreidimensionalen Oberfläche einer gekrümmten Glasscheibe.

Der Erfindung liegt die Aufgabe zu Grunde, ein Verfahren und eine Vorrichtung anzugeben, mit der das geschilderte Bearbeiten von Brandschutzglas in seinem Randbereich sicher und zuverlässig und insbesondere - wenn gewünscht - teil- oder vollautomatisiert ausgeführt werden kann.

Gelöst wird diese Aufgabe erfindungsgemäß mit einem Verfahren, das die Merkmale von Anspruch 1 aufweist.

Bevorzugte und vorteilhafte Ausgestaltungen der Erfindung sind Gegenstand der Unteransprüche.

Bei dem erfindungsgemäßen Verfahren wird aufeinander folgend, insbesondere in einem einzigen Arbeitsgang, bevorzugt unmittelbar aufeinander folgend, die zwischen den Glasscheiben des Brandschutzglases vorhandene Masse im vorgesehenen Ausmaß (Tiefe beispielsweise 2 mm) entfernt und dann in die so gebildete Randfuge Dichtmasse eingebracht.

Bevorzugt ist es, wenn das Entfernen von zwischen den Glasscheiben eingebrachter Masse durch ein abtragendes Werkzeug, beispielsweise mechanisch durch Fräsen oder Bürsten durchgeführt wird. Alternativ besteht die Möglichkeit, die Masse zwischen den Glasscheiben des Brandschutzglases durch Materialerosion mit Hilfe eines Plasmastrahles zu entfernen.

Vorteilhaft ist es bei der Erfindung, dass nach dem Entfernen der Masse zwischen den Glasscheiben und noch vor dem Einbringen der Dichtmasse lose Anteile der Masse aus der Randfuge durch Absaugen entfernt werden. Dabei ist vorteilhaft, dass lose Masse erfindungsgemäß pneumatisch aus der gebildeten Randfuge entfernt wird, dass also ohne Wasser oder andere Flüssigkeiten, welche die zwischen den Glasscheiben vorhandene Masse beschädigen bzw. in ihrer Wirksamkeit beeinträchtigen könnten, gearbeitet wird.

Im Rahmen der Erfindung ist es bevorzugt, wenn zum Abdichten der Randfuge des Brandschutzglases eine aus wenigstens zwei Komponenten bestehende Dichtmasse verwendet wird.

Insoweit die erfindungsgemäße Vorrichtung betroffen ist, besteht diese in einer Ausführungsform aus einer Halterung für das Brandschutzglas, in welcher das Brandschutzglas bevorzugt im Wesentlichen lotrecht stehend, insbesondere um wenige Grade nach hinten geneigt, an einer Stützwand lehnt. Am unteren Rand der Stützwand kann eine Transportvorrichtung (z.B. Bandförderer oder Rollenförderer) für das Bewegen des zu bearbeitenden Brandschutzglases vorgesehen sein.

Des Weiteren weist die erfindungsgemäße Vorrichtung in einer Ausführungsform einen Bearbeitungskopf auf, der wenigstens ein Werkzeug zum Abtragen und zum Entfernen von Masse zwischen den Glasscheiben des Brandschutzglases in dessen Randbereich und wenigstens eine Düse zum Einbringen von Dichtmasse in die so gebildete Randfuge am Rand des Brandschutzglases aufweist.

Bevorzugt ist es im Rahmen der Erfindung, dass die erfindungsgemäße Vorrichtung an ihrem Bearbeitungskopf als pneumatisch wirkende Vorrichtung zum Entfernen loser Masse eine Vorrichtung zum Absaugen von loser Masse aus der Randfuge aufweist, welche Vorrichtung vor dem Einbringen von Dichtmasse wirksam wird.

Das Bearbeitungswerkzeug bzw. der Kopf desselben, an dem das Werkzeug zum Abtragen und zum Entfernen von Masse aus dem Randbereich zwischen den Glasscheiben des Brandschutzglases und an dem die Düse zum Einbringen der Dichtmasse, insbesondere einer Zweikomponenten-Dichtmasse, vorgesehen ist, ist in einer Ausführungsform an einer parallel zur Ebene des Brandschutzglases ausgerichteten, insbesondere im Wesentlichen lotrechten Führung auf und ab verschiebbar, insbesondere über einen Schlitten auf und ab verschiebbar, wobei der Bearbeitungskopf an dem Schlitten um eine zur Ebene des Brandschutzglases normal stehende Achse verschwenkbar ist, sodass der Bearbeitungskopf dem Verlauf des Randes des Brandschutzglases entsprechend ausgerichtet werden kann.

Weitere Einzelheiten, Merkmale und Vorteile der Erfindung ergeben sich aus der nachstehenden Beschreibung eines bevorzugten Ausführungsbeispieles anhand der schematischen Zeichnungen.

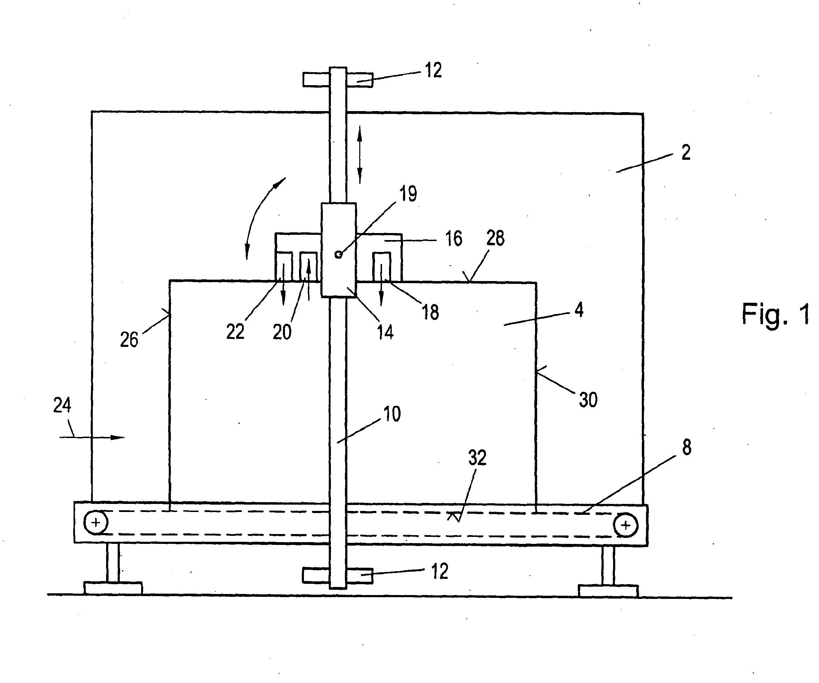

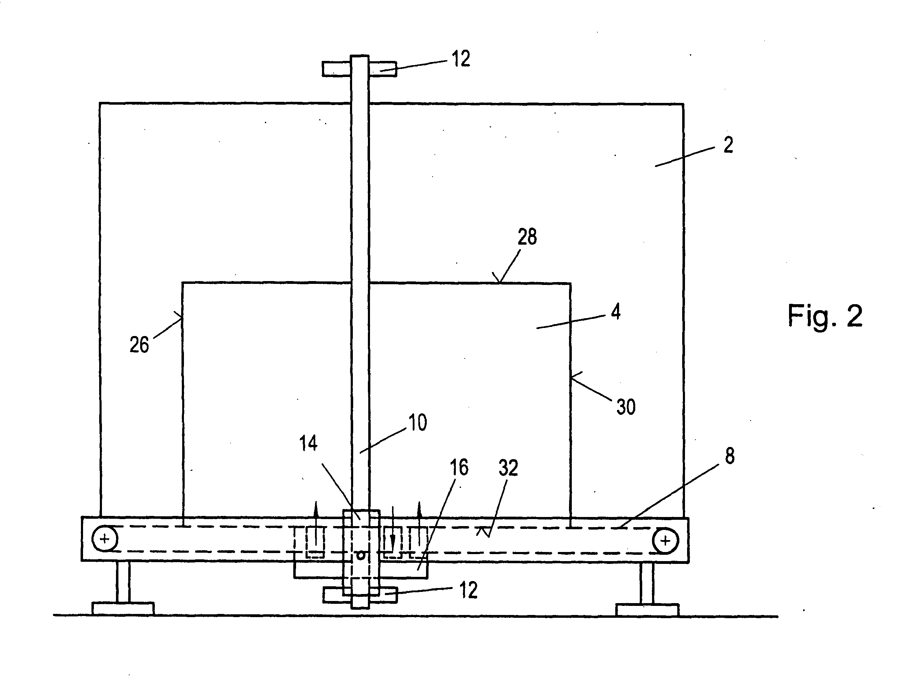

Es zeigt: Fig. 1 die Vorrichtung beim Bearbeiten des oberen Randes von Brandschutzglas und Fig. 2 die Vorrichtung beim Bearbeiten des unteren Randes von Brandschutzglas.

Die erfindungsgemäße Vorrichtung besitzt ein (in den Zeichnungen nur angedeutetes) Gestell 12, in dem als Halterung für das Brandschutzglas 4 eine Stützwand 2 vorgesehen ist, die um wenige Grade nach hinten geneigt ist. An der Stützwand 2 lehnt das zu bearbeitende Brandschutzglas 4, das mit seinem unteren horizontalen Rand 32 auf einer Transportvorrichtung 3, die im Bereich des unteren Randes der Stützwand 2 angeordnet ist, aufsteht. Die Stützwand 2 kann als Rollenfeld, als Luftkissenwand oder als Folge von Transportwalzen ausgebildet sein.

Mit Abstand vor der Stützwand 2 ist eine im Wesentlichen lotrechte, zur Stützwand 2 parallele Führungsschiene 10 vorgesehen, die mit dem in den Zeichnungen nur angedeuteten Grundgestell 12 der Vorrichtung verbunden ist. An dieser Führungsschiene 10 ist ein Schlitten 14 auf und ab verschiebbar, wozu ein Antrieb (nicht gezeigt), beispielsweise ein Antrieb mit Hilfe von Endlosriemen oder -ketten oder ein Zahnstangen-Ritzel-Antrieb vorgesehen sein kann.

An dem Schlitten 14 ist ein Bearbeitungskopf 16 vorgesehen, der am Schlitten 14 um eine zur Ebene der Stützwand 2 bzw. des an ihr lehnenden Brandschutzglases 4 normal stehende Achse 19 verschwenkbar ist. So kann der Bearbeitungskopf 16 in eine Wirklage, die gegenüber dem jeweils zu bearbeitenden Rand des Brandschutzglases 4 ausgerichtet ist, gedreht werden.

Dabei kann vorgesehen sein, dass zum Bearbeiten von rechteckigen oder quadratischen Elementen von Brandschutzglas 4 der Bearbeitungskopf 16 jeweils um 90° verdrehbar ist. Für das Bearbeiten von Brandschutzglas 4 mit einer von der rechteckigen oder quadratischen Form abweichenden Umrissform (Formenglas, Sonderformen) kann der Bearbeitungskopf 16 am Schlitten 14 auch stufenlos verdrehbar sein, damit er der Kontur des Brandschutzglases 4 folgen kann.

In dem Bearbeitungskopf 16 ist im gezeigten Ausführungsbeispiel eine Vorrichtung 18 zum Abtragen bzw. Entfernen von Masse, die zwischen den Glasscheiben des Brandschutzglases 4 vorgesehen ist, vorgesehen.

Die an dem Bearbeitungskopf 16 vorgesehene Vorrichtung 18 zum Entfernen von Masse zwischen den Glasscheiben des Brandschutzglases 4 ist insbesondere ein abrasives Werkzeug.

Diese Vorrichtung 18 kann auch eine mechanische Abtragevorrichtung, beispielsweise eine Fräse oder eine Bürste, sein.

Als Vorrichtung 18 zum Abtragen bzw. Entfernen von Brandschutzmasse kann auch eine Erosionsvorrichtung, die mit Hilfe eines Plasmastrahles arbeitet, vorgesehen sein.

Des Weiteren ist an dem Bearbeitungskopf 16 eine Düse 20 vorgesehen, die mit einer Unterdruckquelle verbunden ist. Mit der Düse 20 kann lose Masse aus der durch das Bearbeiten entstandenen Randfuge im Brandschutzglas 4 pneumatisch entfernt, nämlich im gezeigten Beispiel abgesaugt werden.

Schließlich ist am Bearbeitungskopf 16 wenigstens eine Düse 22 für das Einbringen von Dichtmasse in die zuvor gebildete und gereinigte Randfuge des Brandschutzglases 4 vorgesehen. Durch die Düse 22 wird Dichtmasse in die Randfuge eingespritzt, wobei als Dichtmasse insbesondere eine beispielsweise elastisch aushärtende Zweikomponenten-Dichtmasse verwendet werden kann.

Zum Verschwenken des Bearbeitungskopfes 16 gegenüber dem Schlitten 14, der an der Führung 10 verschiebbar ist, kann ein Zahnradgetriebe, das von einem Motor angetrieben ist, vorgesehen sein.

Der Bearbeitungskopf 16 kann auch senkrecht zur Ebene der Stützwand 2 bzw. des Brandschutzglases 4 verstellbar am Schlitten 10 montiert sein, damit er jeweils in der Mitte zwischen den beiden Glasscheiben von unterschiedlich dickem Brandschutzglas 4 ausgerichtet werden kann. Das Zentrieren des Bearbeitungskopfes 16 kann entweder manuell über ein Bedienpult oder mit Hilfe einer Abtastvorrichtung automatisch erfolgen.

Bei mechanischen Werkzeugen zum Abtragen der Masse zwischen den Glasscheiben des Brandschutzglases 4 ist die Werkzeugbreite entsprechend dem Abstand der Glasscheiben des Brandschutzglases 4 zu wählen.

Bei der Anwendung von Plasmastrahlen kann auf verschiedene Dicken des Brandschutzglases 4'durch Einstellen der Intensität des Plasmastrahles Bedacht genommen werden.

Die Abtragungstiefe beträgt im Regelfall etwa 2 mm und ist durch eine am Bearbeitungskopf 16 vorgesehene Führung, die beispielsweise an den Außenrändern der Glasscheiben des Brandschutzglases 4 angreift, vorgegeben. Es besteht aber auch die Möglichkeit, unterschiedliche Tiefen der Randfuge durch entsprechendes Einstellen des Bearbeitungswerkzeuges, insbesondere des Werkzeuges 18 zum abtragenden Bearbeiten der Masse zwischen den Glasscheiben, zu wählen.

Die beschriebene Vorrichtung arbeitet beispielsweise wie folgt:

Ein zu bearbeitendes Brandschutzglas 4 wird über die Transportvorrichtung 8 am unteren Rand der Stützwand 2 herantransportiert, bis der - bezogen auf die Bewegungsrichtung (Pfeil 24) - hintere lotrechte Rand 26 des Brandschutzglases 4 gegenüber dem Bearbeitungskopf 16 ausgerichtet ist. Der Bearbeitungskopf 16 ist dabei so gedreht, dass seine Werkzeuge 18, 20, 22 auf den Rand 26 hin gerichtet sind. Weiters befindet sich der Bearbeitungskopf 16 zunächst in einer Bereitschaftsstellung unterhalb des Brandschutzglases 4. Der Bearbeitungskopf 16 fährt nun entlang der hinteren Glaskante 26 nach oben, wobei das Brandschutzglas 4 während der Bewegung des Bearbeitungskopfes 16 nach oben stillsteht. Während der Bewegung des Bearbeitungskopfes 16 werden nacheinander die Arbeitsschritte Entfernen der Masse (Werkzeug 18) zwischen den Glasscheiben, Absaugen von loser Masse (Werkzeug 20) und Versiegeln, d.h. Einbringen einer Dichtmasse in die Randfuge (Werkzeug 22), ausgeführt.

Kurz vor dem Erreichen des oberen Endes des hinteren, lotrechten Randes 26 des Brandschutzglases 4 wird das Einfüllen von Versiegelungsmasse unterbrochen, um zu verhindern, dass das abrasive Werkzeug 18 zum Abtragen von Masse zwischen den Glasscheiben des Brandschutzglases 4 beim Bearbeiten des oberen, horizontalen Randes 28 durch Versiegelungsmasse beeinträchtigt wird. Für das Bearbeiten des oberen, horizontalen Randes 28 wird das Brandschutzglas 4 durch die Fördervorrichtung 8, ggf. unterstützt durch eine Mitnahmevorrichtung, relativ zu dem Bearbeitungskopf 16 bewegt. Auch hier wird vor dem Erreichen des Endes des oberen horizontalen Randes 28 (das bezogen auf die Bewegungsrichtung Pfeil 24 vordere Ende) das Einbringen von Dichtmasse unterbrochen, der Bearbeitungskopf 16 geschwenkt und der vordere lotrechte Rand 30 des Brandschutzglases 4 wie zuvor beschrieben bearbeitet. Nach erneutem Schwenken des Bearbeitungskopfes 16 wird bei entsprechend bewegtem Brandschutzglas der untere horizontale Rand 32 ebenfalls bearbeitet (Fig. 2).

Wenn das zu bearbeitende Brandschutzglas eine von der rechteckigen oder quadratischen Form abweichende Sonderform (z.B. gebogene Ränder, viereckige Formen mit anderen Winkeln als 90° im Eckbereich) besitzt, wird der Bearbeitungskopf 16 stufenlos geschwenkt, um ihn in die für die Bearbeitung des Randes jeweils erforderliche Lage zu schwenken. Dabei kann das Schwenken des Bearbeitungskopfes 16 auch mit einer Bewegung des Brandschutzglases 4 kombiniert sein, um den Bearbeitungskopf 16 entlang des Randes von Brandschutzglas mit Sonderform zu bewegen. Bei Sonderformen kann auch so gearbeitet werden, dass zunächst nur das abtragende Werkzeug 18 arbeitet und lose Masse vom Werkzeug 20 abgesaugt wird, und dass in einem zweiten Arbeitsgang von der Düse 22 Dichtmasse in die vorher hergestellte Randfuge eingefüllt wird.

Zusammenfassend kann ein Ausführungsbeispiel der Erfindung wie folgt beschrieben werden:

Um den Rand von Brandschutzglas 4 abzudichten, wird mit einem Werkzeug 18 zwischen den Glasscheiben von Brandschutzglas 4 vorhandene Brandschutzmasse unter Ausbilden einer Randfuge abgetragen. Lose Brandschutzmasse wird aus der Randfuge durch Absaugen über eine Düse 20 entfernt. Schließlich wird aus einer Düse 22 in die Randfuge Dichtmasse eingespritzt. Die Werkzeuge zum Entfernen von Brandschutzmasse, zum Absaugen loser Anteile der Brandschutzmasse aus der Randfuge und zum Einfüllen von Dichtmasse in die Randfuge können an einem Arbeitskopf 16, der entlang des Umfanges des Brandschutzglases bewegt wird, angeordnet sein.

## Patentansprüche

1. Verfahren zum Bearbeiten von Brandschutzglas, das aus wenigstens zwei Glasscheiben und zwischen diesen angeordneter bei Wärmeeinwirkung expandierender und den Raum zwischen den Glasscheiben ausfüllender, gelartiger Masse besteht, wobei
- im Bereich des Umfanges des Brandschutzglases Masse durch mechanisches Abtragen entfernt wird, um eine rückspringende Randfuge zu bilden,
- das Bearbeiten entlang des Umfanges des Brandschutzglases fortschreitend ausgeführt wird,
- dass nach dem Bilden der Randfuge aus dieser lose Masse entfernt wird, indem lose Masse pneumatisch, z.B. durch Absaugen entfernt wird, und
- dass in die so gebildete Randfuge als Dichtmasse eine aushärtende ZweiKomponenten-Masse eingehüllt wird.

2. Verfahren nach Anspruch 1, wobei das Abtragen der Masse aus dem Randbereich des Brandschutzglases und das Entfernen loser Masse in einem ersten Schritt und das Einfüllen von Dichtmasse in einem zweiten Arbeitsschritt ausgeführt wird.

3. Verfahren nach Anspruch 2, wobei die Schritte unmittelbar nacheinander ausgeführt werden.

4. Verfahren nach Anspruch 2, wobei der zweite Schritt erst ausgeführt wird, nachdem der erste Schritt vollständig abgeschlossen, also rings um das Brandschutzglas eine Randfuge hergestellt und aus dieser lose Masse entfernt worden ist.

## Claims

1. Method for processing fire protection glass that consists of at least two glass sheets and a gelatinous mass arranged between them expanding through thermal action and filling the space between the glass sheets, wherein
- in the region of the perimeter of the fire protection glass, mass is removed by wearing away to form a recessed edge joint,
- the processing along the perimeter of the fire protection glass is executed continually,
- that after the formation of the edge joint loose mass is removed there from, and that loose mass is removed pneumatically, e.g., by suction, and
- that a two-component curing mass is filled as a sealing mass into the edge joint thus formed.

2. Method according to claim 1, wherein the wearing away of the mass out of the edge region of the fire protection glass and the removal of loose mass is executed in a first step, and the filling in of sealing mass is executed in a second process step.

3. Method according to claim 2, wherein the steps are executed one immediately after the other.

4. Method according to claim 2, wherein the second step is not executed until after the first step has been fully completed, i.e., an edge joint has been produced all the way around the fire protection glass and loose mass has been removed therefrom.

## Revendications

1. Procédé de traitement de verre coupe-feu, constitué par au moins deux plaques de verre et par une matière de type gel expansible sous l'effet de la chaleur disposée entre les plaques de verre et remplissant l'espace entre celles-ci, procédé dans lequel
- dans la région de la périphérie du verre coupe-feu, en enlève de la matière par abrasion mécanique, pour former un joint marginal en retrait,
- on réalise le traitement progressivement le long de la périphérie du verre coupe-feu,
- après la formation du joint marginal, on enlève la matière en vrac issue de celui-ci, la matière en vrac étant enlevée de façon pneumatique, par exemple par aspiration et
- on remplit le joint marginal ainsi formé par une matière durcissable à deux composants comme matière d'étanchéité.

2. Procédé selon la revendication 1, dans lequel l'abrasion de la matière issue de la région marginale du verre coupe-feu et l'enlèvement de la matière en vrac sont réalisés dans une première étape et le remplissage de la matière d'étanchéité est réalisé dans une seconde étape de travail.

3. Procédé selon la revendication 2, dans lequel les étapes sont réalisées directement l'une après l'autre.

4. Procédé selon la revendication 2, dans lequel la deuxième étape n'est réalisée qu'après que la première étape soit complètement terminée, donc après qu'un joint marginal soit fabriqué tout autour du verre coupe-feu et que la matière en vrac issue de celui-ci soit éliminée.
